# EUROPEAN PATENT SPECIFICATION

(11) **EP 4 549 883 B1**
(45) Date of publication and mention of the grant of the patent: **04.11.2026**
(21) Application number: 23830875.3
(22) Date of filing: 18.05.2023
(51) Int. Cl.: G01D 5/14, G01P 3/481

(54) **ELECTRIC POWER GENERATING ELEMENT, MAGNETIC SENSOR, AND ENCODER**
ELEMENT ZUR ERZEUGUNG VON ELEKTRISCHER ENERGIE, MAGNETSENSOR UND CODIERER
ÉLÉMENT DE GÉNÉRATION D'ÉNERGIE ÉLECTRIQUE, CAPTEUR MAGNÉTIQUE ET CODEUR

(30) Priority: 28.06.2022 JP 2022103336
(43) Date of publication of application: 07.05.2025
(73) Proprietor: Panasonic Intellectual Property Management Co., Ltd., Kadoma-shi, Osaka 571-0057 (JP)
(72) Inventor: MURANISHI, Tomoyuki, Osaka 571-0057 (JP); TANAKA, Masaki, Osaka 571-0057 (JP); TSUTSUMI, Shinichi, Osaka 571-0057 (JP)
(74) Representative: SSM Sandmair
(86) International application number: PCT/JP2023/018572
(87) International publication number: WO 2024/004423

(56) References cited:
- WO-A1-2020/250439
- WO-A1-2021/200361
- WO-A1-2021/200361
- JP-A- 2019 134 065
- JP-A- 2022 079 329
- US-A- 4 287 573
- US-A1- 2019 148 043

## Description

### TECHNICAL FIELD

The present disclosure relates to an electric power generating element, a magnetic sensor, and an encoder, and particularly relates to an electric power generating element, a magnetic sensor, and an encoder using a large Barkhausen effect.

### BACKGROUND ART

In related art, an electric power generating element and the like using a large Barkhausen effect has been known. For example, PTL 1 discloses an electric power generating element including a magnetic body that exhibits the large Barkhausen effect, an electric power generating coil wound around and disposed on the magnetic body, and a soft magnetic body formed to press the magnetic body.

The document WO 2021/200361 A1 shows an electric power generating element comprising a magnetic body that exhibits a large Barkhausen effect, with a coil being wound around the magnetic body, and a soft magnetic body positioned beyond the coil in a direction of a winding axis of the coil, and outside the magnetic body such as to surround the winding axis in a radial direction.

### Citation List

### Patent Literature

PTL 1: International Publication No. 2021/200361

### SUMMARY OF THE INVENTION

However, the electric power generating element of PTL 1 has a problem that it is difficult to appropriately apply a magnetic field to the magnetic body due to a gap between the magnetic body and the soft magnetic body. In addition, when an attempt is made to bring the soft magnetic body into close contact with the magnetic body in order to eliminate the gap between the magnetic body and the soft magnetic body, there is a problem that a highly accurate component is required or a separate process is required, and it is difficult to manufacture the electric power generating element.

The present disclosure has been made to solve such a problem, and an object thereof is to provide an electric power generating element, a magnetic sensor, and an encoder that are easy to appropriately apply a magnetic field to a magnetic body and are easy to be manufactured.

An electric power generating element according to an aspect of the present disclosure includes a magnetic body that exhibits a large Barkhausen effect, a coil wound around the magnetic body, a first soft magnetic body positioned outside the coil in a winding axis line direction in which a winding axis line of the coil extends, the first soft magnetic body being positioned outside the magnetic body in a radial direction around the winding axis line, and a filling member that includes a second soft magnetic body, the filling member filling a gap between the magnetic body and the first soft magnetic body.

A magnetic sensor according to another aspect of the present disclosure includes the electric power generating element and a detection element that is driven based on an electric power generated by the electric power generating element and detects magnetism.

An encoder according to still another aspect of the present disclosure includes a rotating magnet and the electric power generating element that generates an electric power by a change in a magnetic field due to the rotation of the magnet.

According to the present disclosure, it is possible to provide the electric power generating element, the magnetic sensor, and the encoder that are easy to appropriately apply the magnetic field to the magnetic body and are easy to be manufactured.

### BRIEF DESCRIPTION OF THE DRAWINGS

Fig. 1A is a diagram illustrating a motor including an encoder according to a first exemplary embodiment.
Fig. 1B is a diagram illustrating connection between the motor and a load according to the first exemplary embodiment.
Fig. 2A is a diagram illustrating a substrate included in the encoder according to the first exemplary embodiment.
Fig. 2B is a diagram illustrating a rotating plate included in the encoder according to the first exemplary embodiment.
Fig. 3 is a sectional view of an electric power generating element taken along line **III-III** in Fig. 2A.
Fig. 4 is a sectional view of the electric power generating element taken along line IV-IV in Fig. 2A.
Fig. 5A is a plan view of an electric power generating element used for simulation and the like viewed from a rotation axis line direction.
Fig. 5B is a sectional view taken along line VB-VB of the electric power generating element illustrated in Fig. 5A.
Fig. 6 is a graph representing a magnetic flux density obtained by simulation using the electric power generating element illustrated in Figs. 5A and 5B.
Fig. 7A is a graph representing an electric power generation amount obtained by measurement using an electric power generating element of a comparative example.
Fig. 7B is a graph representing an electric power generation amount obtained by measurement using the electric power generating element of Fig. 5A.
Fig. 8A is a graph representing an electric power generation amount standard deviation obtained by measurement using the electric power generating element of the comparative example.
Fig. 8B is a graph representing an electric power generation amount standard deviation obtained by measurement using the electric power generating element of Fig. 5A.
Fig. 9 is a sectional view illustrating an electric power generating element of an encoder according to a second exemplary embodiment.

### DESCRIPTION OF EMBODIMENT

Hereinafter, exemplary embodiments of the present disclosure will be described. Note that, the exemplary embodiments to be described below each illustrate one specific example of the present disclosure. Therefore, numerical values, constituent elements, arrangement positions, and connection modes of the constituent elements, and processes, order of the processes, and the like illustrated or illustrated in the following exemplary embodiments are merely examples, and are not intended to limit the present disclosure. Accordingly, among the constituent elements in the exemplary embodiments below, those not described in an independent claim will be described as optional constituent elements.

In addition, each of the drawings is a schematic view, and is not necessarily illustrated precisely. Note that, in the drawings, substantially identical components are denoted by like reference marks and repetitive explanations thereof will be omitted or simplified.

### (First exemplary embodiment)

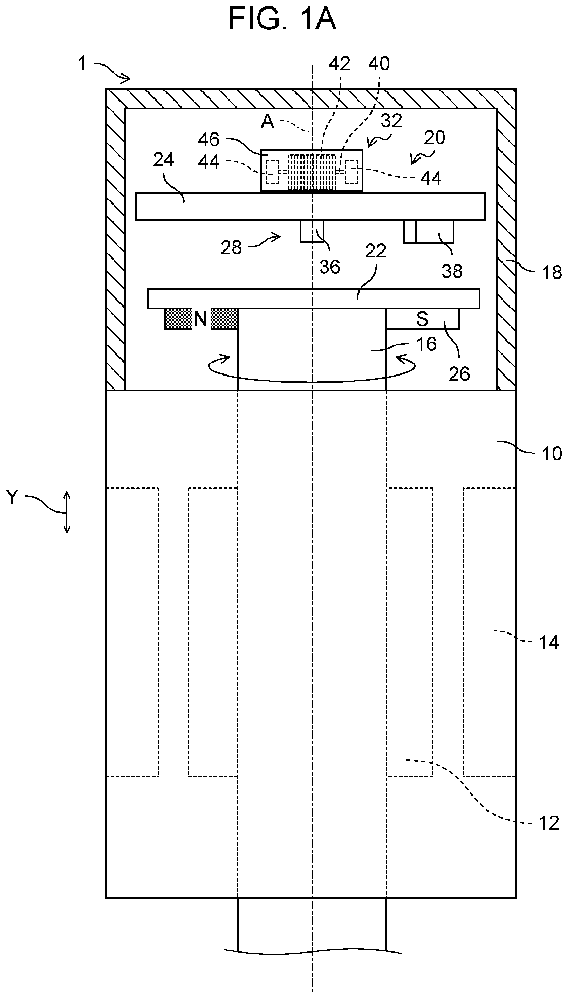

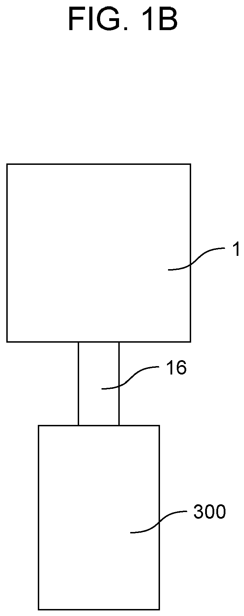

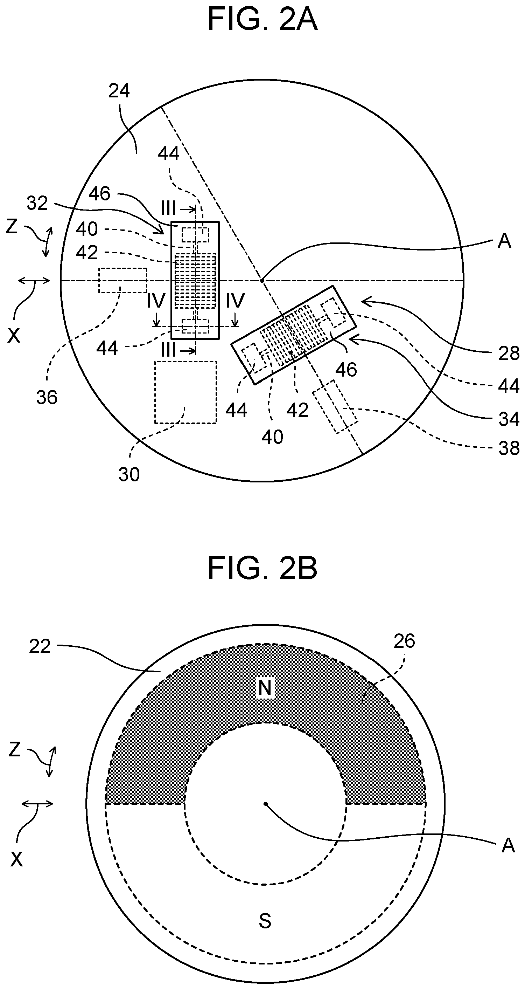

Fig. 1A is a diagram illustrating motor 1 including encoder 20 according to a first exemplary embodiment. Fig. 1A is a diagram viewed from a radial direction (a direction indicated by arrow X in Figs. 2A and 2B) around rotation axis line A of rotating shaft 16 of motor 1. Note that, in Fig. 1A, case 18 and magnet 26 are illustrated in section. In addition, in Fig. 1A, electric power generating element 34 and control circuit 30 illustrated in Fig. 2A are not illustrated. Fig. 1B is a diagram illustrating connection between motor 1 and load 300. Fig. 2A is a diagram illustrating substrate 24 of encoder 20 of Fig. 1A. In addition, Fig. 2B is a diagram illustrating rotating plate 22 of encoder 20 in Fig. 1A. Figs. 2A and 2B are diagrams viewed from a rotation axis line direction (a direction indicated by arrow Y in Fig. 1A) that is a direction in which rotation axis line A of rotating shaft 16 extends.

As illustrated in Fig. 1A, motor 1 includes body 10, rotor 12, stator 14, rotating shaft 16, case 18, and encoder 20.

Rotor 12 and stator 14 are accommodated in body 10. Rotor 12 rotates about stator 14.

Rotating shaft 16 is fixed to rotor 12 and rotates about rotation axis line A together with rotor 12. That is, rotation axis line A is a rotation center of rotating shaft 16 and rotor 12. Rotating shaft 16 extends in a direction of rotation axis line A and has a rod shape such as a columnar shape. An axis of rotating shaft 16 and rotation axis line A coincide with each other. For example, when an electric power is supplied to motor 1, rotating shaft 16 rotates about rotation axis line A together with rotor 12 based on the electric power. A rotation direction of rotating shaft 16 (direction indicated by arrow Z in Figs. 2A and 2B) coincides with a circumferential direction around rotation axis line A. Encoder 20 is provided at one end of rotating shaft 16 in the rotation axis line direction. For example, as illustrated in Fig. 1B, load 300 rotationally driven due to the rotation of rotating shaft 16 is attached to the other end of rotating shaft 16 in the rotation axis line direction. For example, rotating shaft 16 is made of a magnetic metal such as iron. Note that, for example, rotating shaft 16 may be made of nonmagnetic metal. Note that, load 300 may be any device as long as motor 1 is driven, may be, for example, a wheel used for a moving body such as an automobile or a train, or may be a blade of an electric fan.

Case 18 is attached to body 10 to cover one end of rotating shaft 16 in the rotation axis line direction and encoder 20. For example, case 18 is made of a magnetic metal such as iron.

Encoder 20 detects rotation of a rotating body. In the present exemplary embodiment, rotating shaft 16 corresponds to the rotating body, and encoder 20 detects the rotation of rotating shaft 16. For example, encoder 20 detects a rotational position of rotating shaft 16, the rotation direction of rotating shaft 16, a rotation speed of rotating shaft 16, and the like. For example, encoder 20 detects the rotation of rotating shaft 16 by at least one of an absolute method and an incremental method. In the present exemplary embodiment, encoder 20 is a battery-less encoder. As described above, in the present exemplary embodiment, encoder 20 is provided at one end of rotating shaft 16 in the rotation axis line direction. As illustrated in Figs. 1A, 2A, and 2B, encoder 20 includes rotating plate 22, substrate 24, magnet 26, magnetic sensor 28, and control circuit 30.

Rotating plate 22 has a plate shape in which a thickness direction is the rotation axis line direction, and extends in a direction orthogonal to the rotation axis line direction. Rotating plate 22 has a circular shape and a disk shape as viewed from the rotation axis line direction. Note that, for example, rotating plate 22 may not have a disk shape, and may have an annular shape or the like. Rotating plate 22 is attached to one end of rotating shaft 16 in the rotation axis line direction. An axis of rotating plate 22 coincides with rotation axis line A. Rotating plate 22 rotates together with rotating shaft 16.

Substrate 24 has a plate shape in which a thickness direction is the rotation axis line direction, and extends in a direction orthogonal to the rotation axis line direction. Substrate 24 has a circular shape and a disk shape as viewed from the rotation axis line direction. Substrate 24 is disposed at an interval from one end of rotating shaft 16 and rotating plate 22 in the rotation axis line direction, and faces rotating plate 22. An axis of substrate 24 coincides with rotation axis line A. Substrate 24 is fixed not to rotate together with rotating shaft 16.

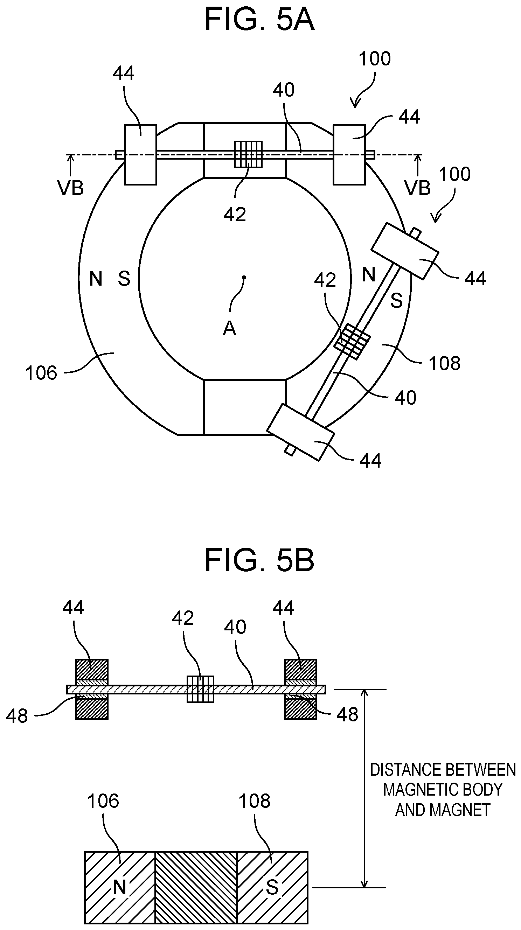

Magnet 26 rotates. In the present exemplary embodiment, when rotating shaft 16 rotates, magnet 26 rotates together with rotating shaft 16 and rotating plate 22. Magnet 26 has an annular shape and is disposed in the rotation direction of rotating shaft 16. Magnet 26 has a plate shape in which a thickness direction is the rotation axis line direction. Magnet 26 is disposed on a principal surface of rotating plate 22 on a side opposite to substrate 24. Magnet 26 has an N pole and an S pole disposed side by side with the N pole in the rotation direction of rotating shaft 16. One half of magnet 26 is magnetized to the N pole, and the other half of magnet 26 is magnetized to the S pole. Note that, magnet 26 may be configured to be able to cause electric power generating element 32 and electric power generating element 34 to generate an electric power by rotating together with rotating shaft 16. Specifically, for example, magnet 26 may be magnetized such that the N pole and the S pole are side by side in the radial direction around rotation axis line A, as in magnet 106 and magnet 108 illustrated in Figs. 5A and 5B to be described later.

Magnetic sensor 28 is a sensor that detects magnetism. Magnetic sensor 28 includes a plurality of electric power generating elements 32 and 34 and a plurality of detection elements 36 and 38. Note that, for example, magnetic sensor 28 may include one electric power generating element instead of the plurality of electric power generating elements. In addition, for example, magnetic sensor 28 may include one detection element instead of the plurality of detection elements.

Each of the plurality of electric power generating elements 32 and 34 generates the electric power by a change in a magnetic field due to the rotation of magnet 26. In the present exemplary embodiment, each of the plurality of electric power generating elements 32 and 34 generates the electric power by the change in the magnetic field due to the rotation of magnet 26 together with rotating shaft 16.

For example, from a state where one end of magnetic body 40 (to be described later) of electric power generating element 32 faces the N pole of magnet 26 and the other end of magnetic body 40 of electric power generating element 32 faces the S pole of magnet 26, in a case where magnet 26 rotates, one end of magnetic body 40 of electric power generating element 32 faces the S pole of magnet 26, and the other end of magnetic body 40 of electric power generating element 32 approaches the N pole of magnet 26 to some extent, a magnetization direction of magnetic body 40 is reversed, and electric power generating element 32 generates the electric power. The same applies to electric power generating element 34.

In addition, for example, in a state where one end of magnetic body 40 of electric power generating element 32 faces the S pole of magnet 26 and the other end of magnetic body 40 of electric power generating element 32 faces the N pole of magnet 26, in a case where magnet 26 rotates, one end of magnetic body 40 of electric power generating element 32 faces the N pole of magnet 26, and the other end of magnetic body 40 of electric power generating element 32 approaches the S pole of magnet 26 to some extent, electric power generating element 32 generates the electric power. The same applies to electric power generating element 34.

Each of the plurality of electric power generating elements 32 and 34 extends in a tangential direction of the rotation direction of rotating shaft 16. Specifically, each of the plurality of electric power generating elements 32 and 34 is disposed such that magnetic body 40 extends in the tangential direction of the rotation direction of rotating shaft 16. Note that, each of the plurality of electric power generating elements 32 and 34 may be disposed to generate an electric power by the change in the magnetic field due to the rotation of magnet 26.

The plurality of electric power generating elements 32 and 34 are disposed on a principal surface of substrate 24 facing a side opposite to rotating shaft 16 (facing a side opposite to rotating plate 22). Note that, the plurality of electric power generating elements 32 and 34 may be disposed on a principal surface of substrate 24 facing rotating shaft 16 (facing rotating plate 22). The plurality of electric power generating elements 32 and 34 are disposed side by side in the rotation direction of rotating shaft 16.

Details of the plurality of electric power generating elements 32 and 34 will be described later.

Each of the plurality of detection elements 36 and 38 is driven based on the electric power generated by electric power generating element 32 and detects magnetism. In the present exemplary embodiment, each of the plurality of detection elements 36 and 38 is driven based on the electric power generated by electric power generating element 32, and detects magnetism by magnet 26.

In addition, each of the plurality of detection elements 36 and 38 is driven based on the electric power generated by the electric power generating element 34, and detects magnetism. In the present exemplary embodiment, each of the plurality of detection elements 36 and 38 is driven based on the electric power generated by the electric power generating element 34, and detects magnetism by magnet 26.

The plurality of detection elements 36 and 38 are disposed on the principal surface of substrate 24 facing rotating shaft 16 (facing rotating plate 22). Note that, the plurality of detection elements 36 and 38 may be disposed on the principal surface of substrate 24 facing the side opposite to rotating shaft 16 (facing the side opposite to rotating plate 22). The plurality of detection elements 36 and 38 are disposed side by side in the rotation direction of rotating shaft 16.

Control circuit 30 is disposed on the principal surface of substrate 24 facing rotating shaft 16 (facing rotating plate 22), and is electrically connected to the plurality of electric power generating elements 32 and 34, and the like. For example, control circuit 30 determines the rotational position or the like of rotating shaft 16 depending on which an electric power generating element among the plurality of electric power generating elements 32 and 34 generates the electric power. In addition, for example, control circuit 30 determines the rotational position or the like of rotating shaft 16 based on detection results of the plurality of detection elements 36 and 38. In addition, for example, control circuit 30 determines the rotational position or the like of rotating shaft 16 based on which an electric power generating element among the plurality of electric power generating elements 32 and 34 generates the electric power and the detection results of the plurality of detection elements 36 and 38. By doing this, encoder 20 detects the rotation of rotating shaft 16.

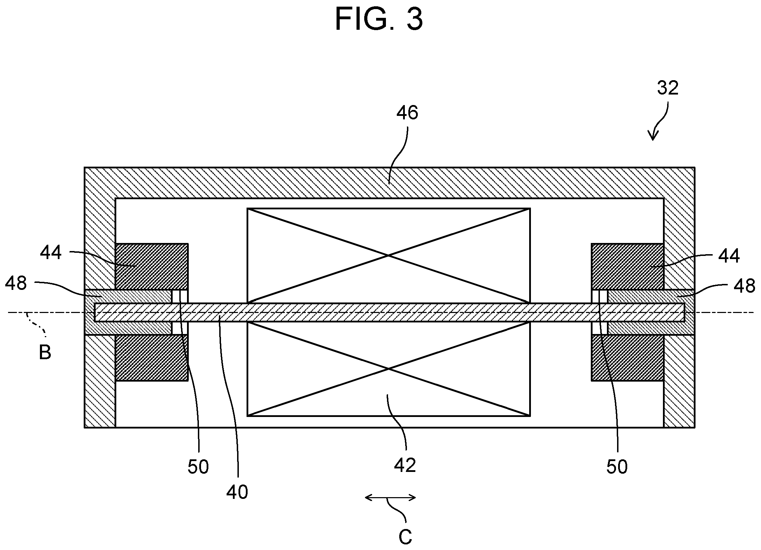

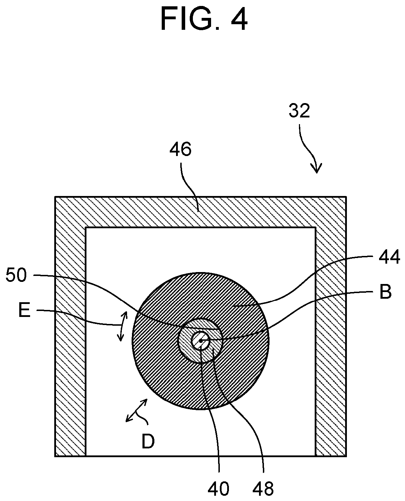

Fig. 3 is a sectional view of electric power generating element 32 taken along line III-III in Fig. 2A. Fig. 4 is a sectional view of electric power generating element 32 taken along line IV-IV in Fig. 2A.

As illustrated in Figs. 3 and 4, electric power generating element 32 includes magnetic body 40, coil 42, first soft magnetic body 44, housing 46, and filling member 48.

Magnetic body 40 is a magnetic body that exhibits a large Barkhausen effect. The magnetic body is made of a magnetic body. For example, magnetic body 40 is a combined magnetic wire such as a Wiegand wire. The Wiegand wire is a magnetic body in which, when a magnetic field of a predetermined value or more is applied in a longitudinal direction (extending direction) of the Wiegand wire, magnetization directions are aligned to be directed to one side in the longitudinal direction.

Coil 42 is wound around magnetic body 40, and magnetic body 40 extends in a winding axis line direction (a direction indicated by arrow C in Fig. 3) that is a direction in which winding axis line B of coil 42 extends. In the present exemplary embodiment, an axis of magnetic body 40 coincides with winding axis line B.

Magnetic body 40 protrudes outward from coil 42 in the winding axis line direction. Specifically, magnetic body 40 protrudes from coil 42 toward one side and further protrudes from coil 42 toward the other side in the winding axis line direction.

Coil 42 is wound around magnetic body 40. Coil 42 is wound around magnetic body 40 such that coil 42 generates an electric power in a case where the large Barkhausen effect is exhibited by magnetic body 40. In the present exemplary embodiment, coil 42 is wound around magnetic body 40 such that winding axis line B of coil 42 coincides with an extending direction of magnetic body 40. When an orientation of a magnetic flux flowing along the extending direction (longitudinal direction) of magnetic body 40 changes, a magnetization direction of magnetic body 40 is jumpingly reversed, and an electric power generation pulse is generated in coil 42. By doing this, electric power generating element 32 generates the electric power.

First soft magnetic body 44 is positioned outside coil 42 in the winding axis line direction in which winding axis line B of coil 42 extends, and is positioned outside magnetic body 40 in a radial direction (see arrow D in Fig. 4) around winding axis line B. First soft magnetic body 44 is made of a soft magnetic body. For example, first soft magnetic body 44 is a ferrite bead.

In the present exemplary embodiment, first soft magnetic body 44 is positioned in one orientation with respect to coil 42 in the winding axis line direction, and is positioned outside magnetic body 40 in the radial direction around winding axis line B in the one orientation. In addition, in the present exemplary embodiment, first soft magnetic body 44 is positioned in the other orientation with respect to coil 42 in the winding axis line direction, and is positioned outside magnetic body 40 in the radial direction around winding axis line B in the other orientation. That is, in the present exemplary embodiment, electric power generating element 32 includes two first soft magnetic bodies 44. Two first soft magnetic bodies 44 are provided symmetrically with respect to coil 42.

First soft magnetic body 44 has an annular shape along the circumferential direction (see arrow E in Fig. 4) around winding axis line B, and has a cylindrical shape with the winding axis line direction as an axial direction. Note that, first soft magnetic body 44 may not have the cylindrical shape, and may have, for example, a polygonal cylindrical shape or the like.

Inner surface 50 of first soft magnetic body 44 in the radial direction around winding axis line B faces magnetic body 40 in the radial direction around winding axis line B. In the present exemplary embodiment, inner surface 50 of first soft magnetic body 44 is parallel to the winding axis line direction and has an annular shape along the circumferential direction around winding axis line B. Inner surface 50 of first soft magnetic body 44 does not come into contact with magnetic body 40.

Housing 46 accommodates and supports magnetic body 40, coil 42, and first soft magnetic body 44.

Filling member 48 fills a gap between magnetic body 40 and first soft magnetic body 44. Filling member 48 fills the gap between magnetic body 40 and first soft magnetic body 44 in the radial direction around winding axis line B. In the present exemplary embodiment, filling member 48 fills a gap between magnetic body 40 and inner surface 50 of first soft magnetic body 44. In the present exemplary embodiment, filling member 48 fills such that the entire gap between magnetic body 40 and inner surface 50 of first soft magnetic body 44 is filled with filling member 48 as viewed from the winding axis line direction.

In the present exemplary embodiment, although filling member 48 does not fill the gap between an end of inner surface 50 of first soft magnetic body 44 on coil 42 side and magnetic body 40, filling member 48 may also be filled therebetween.

Filling member 48 includes a second soft magnetic body. For example, filling member 48 includes a powdery second soft magnetic body. For example, the second soft magnetic body is powdery ferrite or the like.

Filling member 48 is an adhesive, and magnetic body 40 is fixed to first soft magnetic body 44 via filling member 48. For example, filling member 48 is an adhesive that changes from a liquid state to a solid state.

A permeability of the second soft magnetic body is larger than a permeability of first soft magnetic body 44. For example, the permeability of the second soft magnetic body and the amount of second soft magnetic body included in filling member 48 are determined such that a permeability of filling member 48 is larger than the permeability of first soft magnetic body 44.

Since electric power generating element 34 has a configuration similar to electric power generating element 32, the detailed description of electric power generating element 34 is omitted.

Figs. 5A and 5B are diagrams illustrating electric power generating element 100 used for simulation and the like. Fig. 5A is a diagram viewed from the rotation axis line direction, and Fig. 5B is a sectional view taken along line VB-VB in Fig. 5A.

As illustrated in Figs. 5A and 5B, electric power generating element 100 includes magnetic body 40, coil 42, first soft magnetic body 44, and filling member 48. Electric power generating element 100 is mainly different from electric power generating element 32 in that filling member 48 fills the gap to fill the entire gap between magnetic body 40 and first soft magnetic body 44.

Here, a diameter of magnetic body 40 is 0.35 mm, and an inner diameter of first soft magnetic body 44 is 0.7 mm.

For example, electric power generating element 100 generates an electric power in a case where a state where one end of magnetic body 40 faces the N pole of magnet 106 and the other end of magnetic body 40 faces the S pole of magnet 108 is changed to a state where one end of magnetic body 40 faces the S pole of magnet 108 and the other end of magnetic body 40 approaches the N pole of magnet 106 to some extent.

In addition, for example, electric power generating element 100 generates the electric power in a case where a state where one end of magnetic body 40 faces the S pole of magnet 108 and the other end of magnetic body 40 faces the N pole of magnet 106 is changed to a state where one end of magnetic body 40 faces the N pole of magnet 106 and the other end of magnetic body 40 approaches the S pole of magnet 108 to some extent.

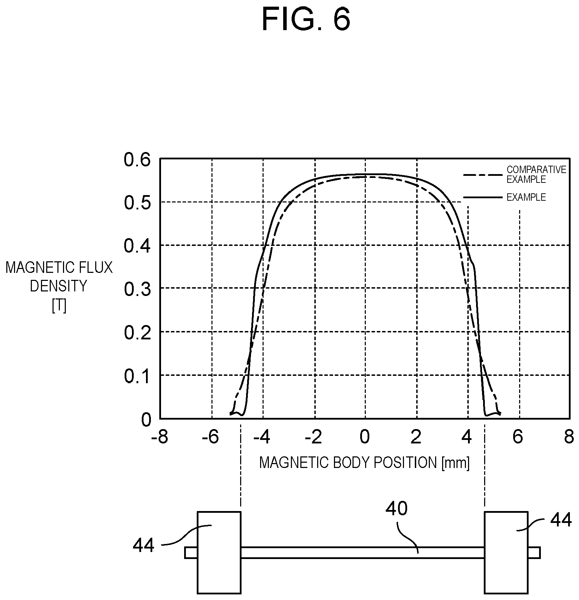

Fig. 6 is a graph representing a magnetic flux density obtained by simulation using electric power generating element 100 illustrated in Figs. 5A and 5B. In the graph of Fig. 6, an example (solid line) indicates a simulation result using electric power generating element 100, and a comparative example (dashed dotted line) indicates a simulation result using an electric power generating element in which filling member 48 is removed from electric power generating element 100.

As illustrated in Fig. 6, as compared with the electric power generating element according to the comparative example, in electric power generating element 100 according to the example, the magnetic flux density more uniformly approaches between a position of about 4.5 mm from a center (0 mm) in magnetic body 40 and a position of about -4.5 mm from the center (0 mm) in magnetic body 40. As described above, it has been found that electric power generating element 100 according to the example has a higher magnetic flux density contributing to the electric power generation by coil 42 as compared with the electric power generating element according to the comparative example.

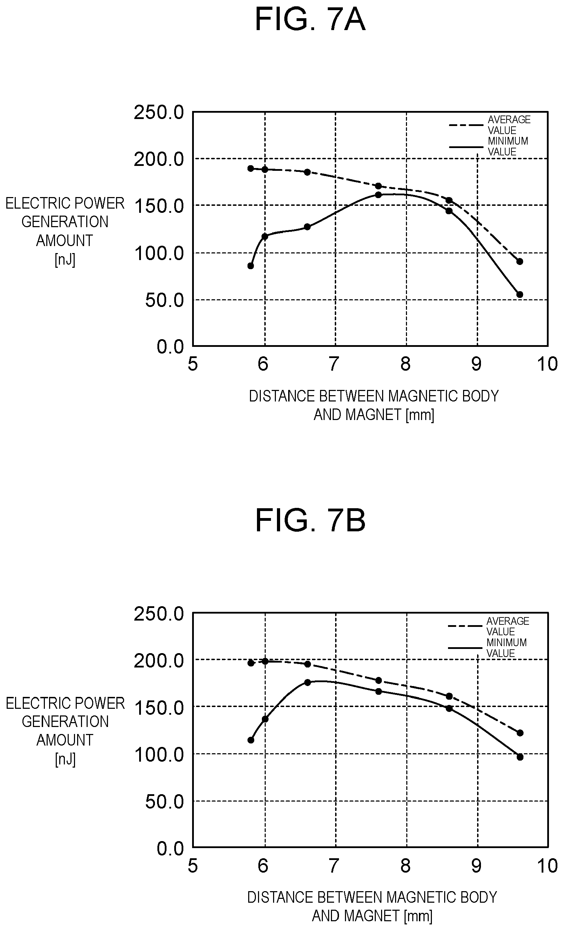

Fig. 7A is a graph representing an electric power generation amount obtained by measurement using the electric power generating element according to the comparative example. Fig. 7B is a graph representing an electric power generation amount obtained by measurement using electric power generating element 100 according to the example illustrated in Figs. 5A and 5B. In each of Figs. 7A and 7B, a horizontal axis represents a distance between the magnetic body and the magnet (unit: mm) illustrated in Fig. 5B, and a vertical axis represents an electric power generation amount (unit: nJ). In addition, an average value (dashed dotted line) in the graphs of Figs. 7A and 7B is an average value of electric power generation amounts of 2500 electric power generation pulses. In addition, a minimum value (solid line) in the graphs of Figs. 7A and 7B is a minimum value of the electric power generation amounts of the 2500 electric power generation pulses.

As illustrated in Fig. 7A, in the electric power generating element according to the comparative example, when a distance between magnetic body 40 and magnet 106 (or magnet 108) (a distance between the magnetic body and the magnet, see Fig. 5B) changes, the average value and the minimum value of the electric power generation amounts of 2500 electric power generation pulses change greatly.

As illustrated in Fig. 7B, in electric power generating element 100 according to the example, when the distance between magnetic body 40 and magnet 106 (or magnet 108) changes, the average value and the minimum value of the electric power generation amounts of the 2500 electric power generation pulses change, but it has been found that these change amounts are smaller than in the electric power generating element according to the comparative example.

As described above, in electric power generating element 100 according to the example, even though the distance between magnetic body 40 and magnet 106 (magnet 108) changes, the average value and the minimum value of the electric power generation amounts of the electric power generation pulses are less likely to change as compared with the electric power generating element according to the comparative example, and a magnetic field can be appropriately applied to magnetic body 40 as compared with the electric power generating element according to the comparative example.

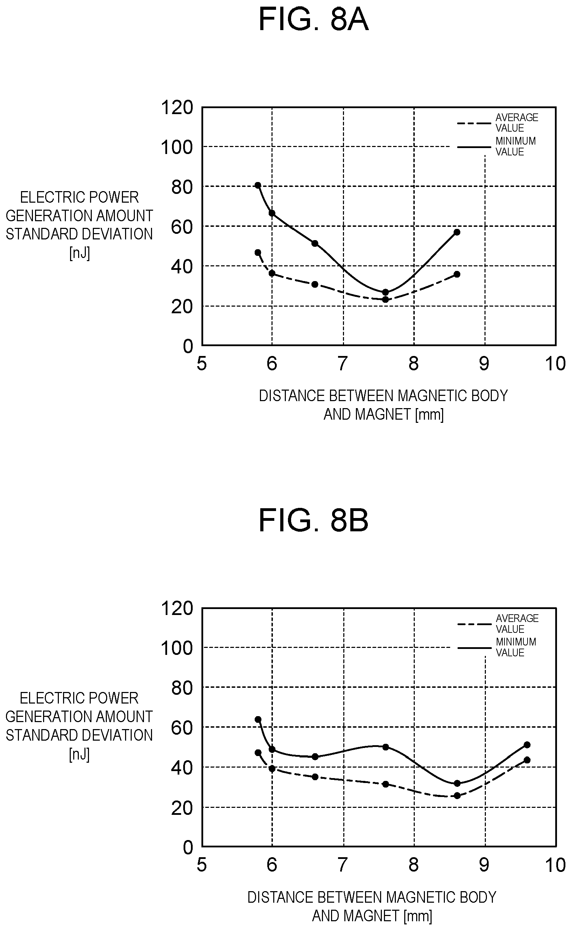

Fig. 8A is a graph representing an electric power generation amount standard deviation obtained by measurement using the electric power generating element according to the comparative example. Fig. 8B is a graph representing an electric power generation amount standard deviation obtained by measurement using electric power generating element 100 according to the example illustrated in Figs. 5A and 5B. In each of Figs. 8A and 8B, a horizontal axis represents a distance between the magnetic body and the magnet (unit: mm) illustrated in Fig. 5B, and a vertical axis represents the electric power generation amount standard deviation (unit: nJ). In addition, an average value (dashed dotted line) in the graphs of Figs. 8A and 8B is an average value of standard deviations of the electric power generation amounts of the 2500 electric power generation pulses. In addition, a maximum value (solid line) in the graphs of Figs. 8A and 8B is a maximum value of the standard deviations of the electric power generation amounts of the 2500 electric power generation pulses.

As illustrated in Fig. 8A, in the electric power generating element according to the comparative example, when the distance between magnetic body 40 and magnet 106 (or magnet 108) changes, the average value of the standard deviations of the electric power generation amounts of the 2500 electric power generation pulses and the maximum value of the standard deviations greatly change.

As illustrated in Fig. 8B, in electric power generating element 100 according to the example, when the distance between magnetic body 40 and magnet 106 (or magnet 108) changes, the average value of the standard deviations and the maximum value of the standard deviations of the electric power generation amounts of the 2500 electric power generation pulses change, but it has been found that these change amounts are smaller than those of the electric power generating element according to the comparative example.

As described above, in electric power generating element 100 according to the example, even though the distance between magnetic body 40 and magnet 106 (or magnet 108) changes, the average value of the standard deviations of the electric power generation amounts of the electric power generation pulses and the maximum value of the standard deviations are less likely to change as compared with the electric power generating element according to the comparative example, and the magnetic field can be appropriately applied to magnetic body 40 as compared with the electric power generating element according to the comparative example.

Electric power generating element 32 according to the present exemplary embodiment includes magnetic body 40 that exhibits the large Barkhausen effect, coil 42 wound around magnetic body 40, first soft magnetic body 44 that is positioned outside coil 42 in the winding axis line direction in which winding axis line B of coil 42 extends and is positioned outside magnetic body 40 in the radial direction around winding axis line B, and filling member 48 that includes the second soft magnetic body and fills the gap between magnetic body 40 and first soft magnetic body 44.

Accordingly, since filling member 48 including the second soft magnetic body fills the gap between magnetic body 40 and first soft magnetic body 44, the generation of the gap between magnetic body 40 and first soft magnetic body 44 can be suppressed, and the magnetic field can be easily appropriately applied to magnetic body 40. In addition, since it is not necessary to bring first soft magnetic body 44 into close contact with magnetic body 40 not to form the gap between magnetic body 40 and first soft magnetic body 44, it is easy to manufacture electric power generating element 32. As described above, it is easy to appropriately apply the magnetic field to magnetic body 40, and it is easy to manufacture electric power generating element 32.

In addition, in electric power generating element 32 according to the present exemplary embodiment, filling member 48 is the adhesive, and magnetic body 40 is fixed to first soft magnetic body 44 via filling member 48.

Accordingly, since magnetic body 40 can be fixed to first soft magnetic body 44 via filling member 48, it is further easy to manufacture electric power generating element 32.

In addition, in electric power generating element 32 according to the present exemplary embodiment, the permeability of the second soft magnetic body is larger than the permeability of first soft magnetic body 44.

Accordingly, since the permeability of filling member 48 can be suppressed from becoming smaller than the permeability of first soft magnetic body 44, it is further easy to appropriately apply the magnetic field to magnetic body 40.

In addition, magnetic sensor 28 according to the present exemplary embodiment includes electric power generating element 32 and detection element 36 that is driven based on the electric power generated by electric power generating element 32 and detects magnetism.

Accordingly, operations and effects similar to electric power generating element 32 are obtained.

In addition, encoder 20 according to the present exemplary embodiment includes rotating magnet 26 and electric power generating element 32 that generates the electric power by the change in the magnetic field due to the rotation of magnet 26.

Accordingly, operations and effects similar to electric power generating element 32 are obtained.

### (Second exemplary embodiment)

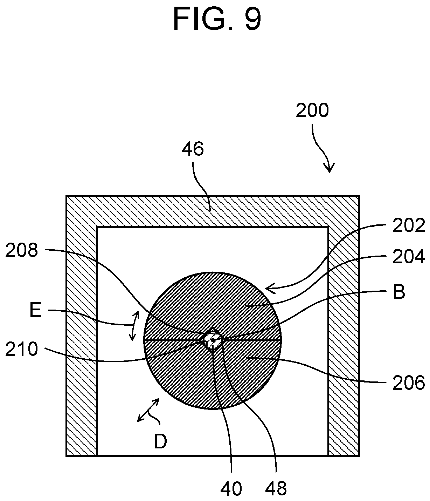

Fig. 9 is a sectional view illustrating electric power generating element 200 of an encoder according to a second exemplary embodiment.

The encoder according to the second exemplary embodiment is mainly different from encoder 20 in that electric power generating element 200 is provided instead of electric power generating element 32 and electric power generating element 200 is provided instead of electric power generating element 34.

As illustrated in Fig. 9, electric power generating element 200 is mainly different from electric power generating element 32 in that first soft magnetic body 202 different from first soft magnetic body 44 is provided. First soft magnetic body 202 has two magnetic body pieces 204 and 206.

First soft magnetic body 202 presses magnetic body 40 in the radial direction around winding axis line B. In the present exemplary embodiment, magnetic body piece 204 presses magnetic body 40 from one side in the radial direction around winding axis line B, and magnetic body piece 206 presses magnetic body 40 from the other side in the radial direction. For example, a screw or the like is tightened to apply a force to magnetic body piece 204 and magnetic body piece 206 in directions approaching each other. As a result, magnetic body 40 is pressed.

First soft magnetic body 202 comes into contact with magnetic body 40. Inner surface 208 of magnetic body piece 204 in the radial direction around winding axis line B faces magnetic body 40 in the radial direction, and is recessed outward in the radial direction as viewed from the winding axis line direction. In the present exemplary embodiment, inner surface 208 of magnetic body piece 204 is recessed in a substantially L shape. Note that, for example, inner surface 208 of magnetic body piece 204 may be recessed in an elliptical arc shape or the like. A part of inner surface 208 of magnetic body piece 204 comes into contact with magnetic body 40. In addition, inner surface 210 of magnetic body piece 206 in the radial direction around winding axis line B faces magnetic body 40 in the radial direction, and is recessed outward in the radial direction as viewed from the winding axis line direction. In the present exemplary embodiment, inner surface 210 of magnetic body piece 206 is recessed in a substantially L shape. Note that, for example, inner surface 210 of magnetic body piece 206 may be recessed in an elliptical arc shape or the like. A part of inner surface 210 of magnetic body piece 206 comes into contact with magnetic body 40.

Filling member 48 fill the gaps between inner surface 208 of magnetic body piece 204 and magnetic body 40 and between inner surface 210 of magnetic body piece 206 and magnetic body 40 as viewed from the winding axis line direction.

In electric power generating element 200 according to the present exemplary embodiment, first soft magnetic body 202 presses magnetic body 40 in the radial direction around winding axis line B.

Accordingly, since the generation of the gap between magnetic body 40 and first soft magnetic body 44 can be suppressed, it is further easy to appropriately apply the magnetic field to magnetic body 40.

In addition, in electric power generating element 200 according to the present exemplary embodiment, first soft magnetic body 202 comes into contact with magnetic body 40.

Accordingly, since the generation of the gap between magnetic body 40 and first soft magnetic body 44 can be suppressed, it is further easy to appropriately apply the magnetic field to magnetic body 40.

### (Other exemplary embodiments and the like)

As described above, the exemplary embodiments have been described as an illustration of the techniques disclosed in the present application. However, the techniques according to the present disclosure is not limited thereto, and can also be applied to exemplary embodiments or variations in which changes, replacements, additions, omissions, and the like are made as appropriate. The scope of the present invention is defined by the appended claims.

In the above-described exemplary embodiments, although it has been described that filling member 48 is the adhesive and magnetic body 40 is fixed to first soft magnetic body 44 via filling member 48, the present disclosure is not limited thereto. For example, filling member 48 may not be the adhesive, and magnetic body 40 may be fixed to the housing by another adhesive or the like. The same applies to first soft magnetic body 202.

In the above-described exemplary embodiments, although it has been described that the permeability of the second soft magnetic body is larger than the permeability of first soft magnetic body 44 has been described, the present disclosure is not limited thereto. For example, the permeability of the second soft magnetic body may be less than or equal to the permeability of first soft magnetic body 44. The same applies to first soft magnetic body 202.

### INDUSTRIAL APPLICABILITY

The electric power generating element, the magnetic sensor, and the encoder according to the present disclosure can be used for the electric power generating element and the like using the large Barkhausen effect.

### REFERENCE MARKS IN THE DRAWINGS

1: motor
10: body
12: rotor
14: stator
16: rotating shaft
18: case
20: encoder
22: rotating plate
24: substrate
26, 106, 108: magnet
28: magnetic sensor
30: control circuit
32, 34, 100, 200: electric power generating element
36, 38: detection element
40: magnetic body
42: coil
44, 202: first soft magnetic body
46: housing
48: filling member
50, 208, 210: inner surface
204, 206: magnetic body

## Claims

1. An electric power generating element (32) comprising:
a magnetic body (40) that exhibits a large Barkhausen effect;
a coil (42) wound around the magnetic body;
a first soft magnetic body (44) positioned outside the coil in a winding axis line (B) direction in which a winding axis line of the coil extends, the first soft magnetic body being positioned outside the magnetic body in a radial direction around the winding axis line; and
a filling member (48) that includes a second soft magnetic body, the filling member filling a gap between the magnetic body and the first soft magnetic body.

2. The electric power generating element according to Claim 1, wherein
the filling member is an adhesive, and
the magnetic body is fixed to the first soft magnetic body via the filling member.

3. The electric power generating element according to Claim 1, wherein
a permeability of the second soft magnetic body is larger than a permeability of the first soft magnetic body.

4. The electric power generating element according to Claim 1, wherein
the first soft magnetic body presses the magnetic body in the radial direction.

5. The electric power generating element according to Claim 1, wherein
the first soft magnetic body comes into contact with the magnetic body.

6. A magnetic sensor (28) comprising:
the electric power generating element (32) according to any one of Claims 1 to 5; and
a detection element (36) that is driven based on an electric power generated by the electric power generating element and detects magnetism.

7. An encoder (20) comprising:
a magnet (26) that rotates; and
the electric power generating element (32) according to any one of Claims 1 to 5 that generates an electric power by a change in a magnetic field due to the magnet that rotates.

## Patentansprüche

1. Ein Stromerzeugungselement (32), umfassend:
einen Magnetkörper (40), der einen starken Barkhausen-Effekt aufweist;
eine um den Magnetkörper gewickelte Spule (42);
einen ersten weichmagnetischen Körper (44), der außerhalb der Spule in einer Richtung der Wickelachsenlinie (B) angeordnet ist, in der sich die Wickelachsenlinie der Spule erstreckt, wobei der erste weichmagnetische Körper außerhalb des Magnetkörpers in radialer Richtung um die Wickelachsenlinie herum angeordnet ist; und
ein Füllelement (48), das einen zweiten weichmagnetischen Körper umfasst, wobei das Füllelement einen Spalt zwischen dem Magnetkörper und dem ersten weichmagnetischen Körper ausfüllt.

2. Das Stromerzeugungselement nach Anspruch 1, wobei
das Füllelement ein Klebstoff ist und
der Magnetkörper über das Füllelement am ersten weichmagnetischen Körper befestigt ist.

3. Das Stromerzeugungselement nach Anspruch 1, wobei
die Permeabilität des zweiten weichmagnetischen Körpers größer ist als die Permeabilität des ersten weichmagnetischen Körpers.

4. Das Stromerzeugungselement nach Anspruch 1, wobei
der erste weichmagnetische Körper den Magnetkörper in radialer Richtung andrückt.

5. Das Stromerzeugungselement nach Anspruch 1, wobei
der erste weichmagnetische Körper mit dem Magnetkörper in Kontakt steht.

6. Ein Magnetsensor (28), umfassend:
das Stromerzeugungselement (32) gemäß einem der Ansprüche 1 bis 5; und
ein Erfassungselement (36), das auf der Grundlage des von dem Stromerzeugungselement erzeugten Stroms angesteuert wird und Magnetismus erfasst.

7. Ein Encoder (20), umfassend:
einen Magneten (20), der sich dreht; und
das Stromerzeugungselement (32) gemäß einem der Ansprüche 1 bis 5, das durch eine Änderung des Magnetfelds aufgrund des sich drehenden Magneten elektrischen Strom erzeugt.

## Revendications

1. Élément de génération d'énergie électrique (32) comprenant :
un corps magnétique (40) qui présente un effet Barkhausen important,
une bobine (42) enroulée autour du corps magnétique,
un premier corps magnétique doux (44) positionné extérieurement à la bobine, vu dans la direction de la ligne axiale d'enroulement dans laquelle s'étend la ligne axiale d'enroulement de la bobine, le premier corps magnétique doux étant positionné extérieurement au corps magnétique dans une direction radiale autour de la ligne axiale d'enroulement, et
un élément de remplissage (48) qui comprend un deuxième corps magnétique doux, l'élément de remplissage remplissant un espace entre le corps magnétique et le premier corps magnétique doux.

2. Élément de génération d'énergie électrique selon la revendication 1, dans lequel :
l'élément de remplissage est un adhésif, et
le corps magnétique est fixé au premier corps magnétique doux au moyen de l'élément de remplissage.

3. Élément de génération d'énergie électrique selon la revendication 1, dans lequel :
la perméabilité du deuxième corps magnétique doux est plus importante que la perméabilité du premier corps magnétique doux.

4. Élément de génération d'énergie électrique selon la revendication 1, dans lequel :
le premier corps magnétique doux exerce une pression sur le corps magnétique dans la direction radiale.

5. Élément de génération d'énergie électrique selon la revendication 1, dans lequel :
le premier corps magnétique doux vient en contact avec le corps magnétique.

6. Capteur magnétique (28) comprenant :
un élément de génération d'énergie électrique (32) selon l'une des revendications 1 à 5, et
un élément de détection (36) fonctionnant à l'énergie électrique produite par l'élément de génération d'énergie électrique et qui détecte le magnétisme.

7. Codeur (20) comprenant :
un aimant (26) en rotation, et
l'élément de génération d'énergie électrique (32) selon l'une des revendications 1 à 5 qui génère de l'énergie électrique grâce à une variation du champ magnétique provoquée par l'aimant en rotation.
